# EUROPEAN PATENT APPLICATION

(11) **EP 3 332 882 A1**
(43) Date of publication of application: **13.06.2018**
(21) Application number: 17204891.0
(22) Date of filing: 01.12.2017
(51) Int. Cl.: B09B 3/00, B09B 5/00

(54) **TELEMATIC CONTROL SYSTEM FOR A FOOD WASTE MANAGEMENT SYSTEM AND ASSOCIATED FOOD WASTE MANAGEMENT SYSTEM**

(30) Priority: 08.12.2016 GB 201620903
(71) Applicant: Whale Tankers Ltd., Solihull, West Midlands B91 2SU (GB)
(72) Inventor: Warmington, Mark, Solihull, West Midlands B91 2SU (GB); Pile, Timothy, Solihull, West Midlands B91 2SU (GB); Manning, Alan, Solihull, West Midlands B91 2SU (GB)
(74) Representative: Bishton, Amy Virginia

(57) **Abstract**

Waste management apparatus comprising; means for receiving and storing organic waste, processing means configured to process the organic waste into feedstock, and a programmable logic controller in communication with the processing means, wherein the programmable logic controller is configured to: determine values of one or more properties of the feedstock using the processing means, determine one or more new operational parameters of the processing means based on the determined values of the one or more properties of the feedstock, and output instructions to the processing means, wherein the instructions are based on the determined one or more new operational parameters.

## Description

### Field of the Invention

The present invention relates to food waste management system, and in particular, a telematics control system for a food waste management system.

### Background to the Invention

The use of renewable energy and the development and adoption of associated green technologies is ever-increasing. One renewable energy source, bio methane, is a product of biogas. Biogas is usually produced by anaerobic digestion plants, which process organic waste, such as food and livestock waste. In an anaerobic digestion plant, microorganisms break down organic material (otherwise known as feedstock) to form bio methane and organic fertilizer. Naturally, the continued production of biogas relies on the ongoing supply of organic waste. Furthermore, the production of biogas is maximised when the calorific content of the food waste stock is optimised to be as high as possible.

Many businesses dealing with food generate unavoidable food waste. Such waste could be, and sometimes is, directed to anaerobic digestion plants. To encourage businesses to manage their organic waste for renewable energy purposes (rather than sending it to landfill or incineration), systems exist which allow businesses to manage the processing of their organic waste before it is delivered to an anaerobic digestion site. It is an aim of the present invention to improve the efficiencies of current systems and processes for producing feedstock for biogas production.

### Summary of the Invention

According to a first aspect of the invention, there is provided waste management apparatus comprising means for receiving and storing organic waste, processing means configured to process the organic waste into feedstock, and a processor in communication with the processing means, wherein the processor is configured to determine values of one or more properties of the feedstock using the processing means, determine one or more new operational parameters of the processing means based on the determined values of the one or more properties of the feedstock, and output instructions to the processing means, wherein the instructions are based on the determined one or more new operational parameters. Advantageously, monitoring of the feedstock and adjusting the operation of the apparatus accordingly results in efficient feedstock generation and improved feedstock quality.

According to a second aspect of the invention, there is provided a method for controlling operation of waste management apparatus, comprising calculating a value of a parameter of the organic waste in the waste management apparatus, comparing the calculated value with stored data pertaining to the parameter of the waste; determining values for one or more operational parameters of the waste management apparatus based on the comparison, generating instructions based on the determined values for one or more operational parameters of the waste management apparatus; and outputting the instructions to the waste management apparatus.

Preferable features of the invention are defined in the appended dependent claims.

### Brief description of the drawings

**Figure 1** is a schematic diagram of food waste management apparatus according to an embodiment of the invention;
**Figure 2** is flow diagram of the main operational steps of food waste management according to an embodiment of the invention;
**Figure 3** is a schematic diagram illustrating components of a food waste management system according to an embodiment of the invention;
**Figure 4** is a flow diagram of the main steps of a data collection and logging process according to an embodiment of the present invention.

### Detailed Description

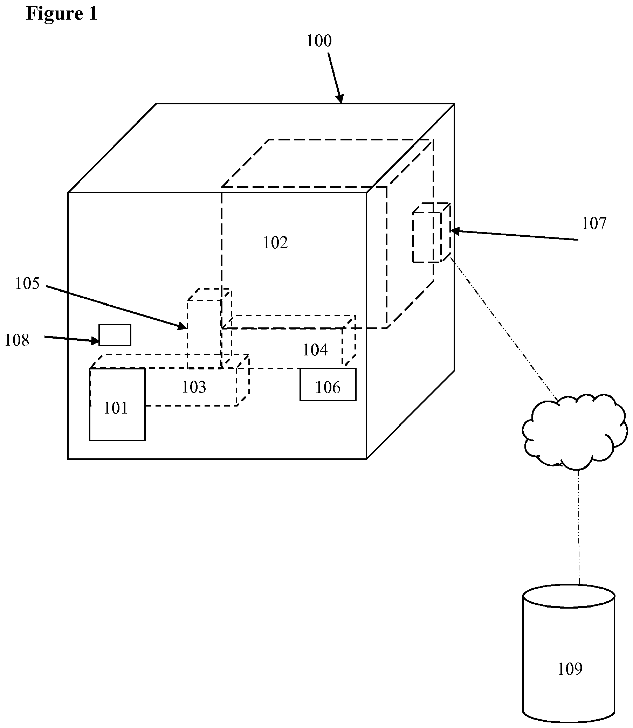

Organic waste management apparatus is apparatus for receiving organic waste, processing the waste to generate 'feedstock', monitoring the feedstock and storing the feedstock until the feedstock is extracted from the apparatus and delivered to a bio digestion facility. The main components of an exemplary organic waste management system are shown in figure 1.

The system of Figure 1 shows an organic waste management unit 100 which includes a number of components, the arrangement of which are shown only schematically in Figure 1. Unit 100 is a large container which is typically installed at the premises of a business which generates food waste. A hopper 101 is located on the side of the unit 100 and provides an inlet through which food waste can be received by the unit 100. The food waste is pulled into a sealed storage tank 102 located within the unit 100 where it is processed over time to convert it to a 'soup' of feedstock which ultimately produces biogas. The waste fed through hopper 101 is pulled into storage tank 102 via macerator 103. Once inside storage tank 102, the waste content is and hydrolysed/homogenised (using hydrolyser/homogeniser 104 of storage tank 102). Later references to 'hyrolyser', hydrolysed' or 'hydrolysing' are also intended to refer to homogeniser, homogenised or homogenising respectively. Macerator 103 breaks the food into smaller pieces and hydrolyser 104 chums the contents. A vacuum pump 105 pulls waste through the hopper 101, through to macerator 103 and into the storage tank 102. The vacuum pump 105 comprises a carbon filter fitted on the exhaust side to minimise odour escaping from the storage tank 102.

When storage tank 102 is full and the food waste has been sufficiently processed into feedstock which is optimal for biogas production (as will be discussed in further detail below), storage tank 102 is emptied via collection outlet 106. A control unit 107 located within the unit 100 is configured to monitor, using data from sensors located in storage tank 102, parameters of the feedstock (e.g. its viscosity, volume, specific gravity) and is in communication with a remote management system 109. A user interface 108 is configured to output user instructions, warning messages, etc., as instructed by control unit 107.

Although not shown in figure 1, unit 100 may also comprise an RFID access control module in communication with control module 107. The access control module is configured to read an RFID tag of an individual, by means that are known in the art. The RFID reader on unit 100 is configurable to allow only particular individuals to carry out waste input and/or feedstock extraction procedures. This allows the control module 107 to monitor which individuals are using the machine and how often they are using it. This information is typically used for the purposes of periodic usage reporting to an owner of the machine or associated business or for troubleshooting or billing/invoicing purposes. Control module 107 may also estimate the average amount of waste being input by a particular user into the unit 100 based on a variation in readings taken by weight sensor 317 (as discussed further below).

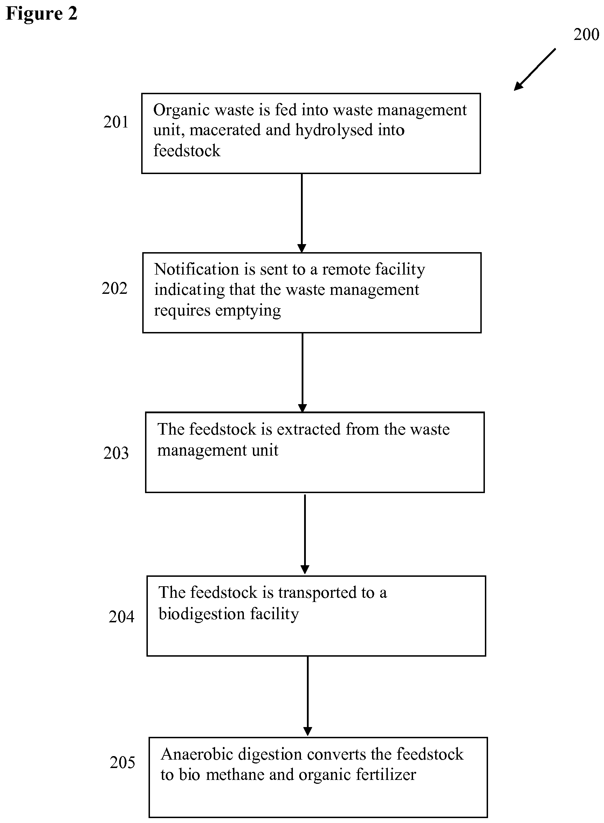

An overview of a waste management process 200 is shown in figure 2. At step 201, unit 100 receives organic waste and processes it into feedstock. When the tank is full and/or parameters of the feedstock meet certain criteria, a notification is sent to remote system 109 from control module 107 and the unit 100 is emptied (typically into a large transportable tanker) at step 203. It will be appreciated that the contents of multiple units 100, located at different places, may be extracted by a single transportation tanker. The feedstock is taken to a biodigestion facility at step 204 and is further processed at the biodigestion facility at step 205.

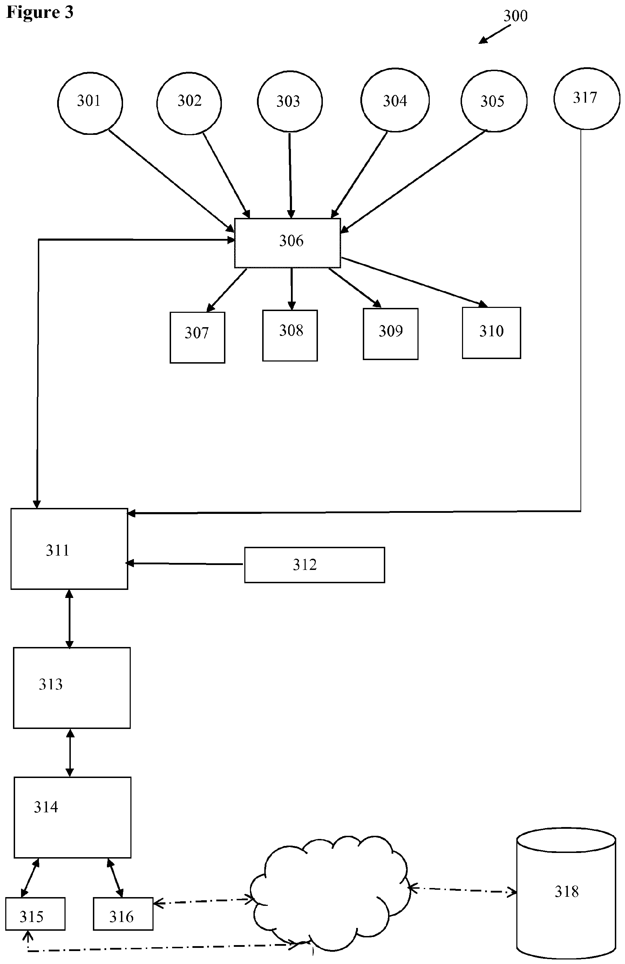

The system of figure 1 will now be described in further detail with reference to figure 3. Figure 3 shows a number of sensors 301-305 and 317 which are located either in storage tank 102 (not shown) or otherwise within unit 100 (not shown). The sensors 301-305 are in communication with controller area network module 306 which is located within control module 107 (not shown). Module 306 is also in communication with inverters 307-310 which control operation of components of unit 100, as will be described in further detail below. PLC 311 is also located within control module 107 and is configured to receive data from sensor 317 and module 306. PLC 311 can also send data to module 306, such as operating instructions for inverters 307-310. Via remote controller 313, modem 314 and GPRS antenna 315 or wifi adaptor 316, data can be exchanged wirelessly between remote system 318 and PLC 311.

Vacuum sensor 301 is typically a PM 2655 programmable electronic pressure sensor with a range of -0.99 to 4.00 bar (-14.4 to 58.0 PSI). The pressure inside storage tank 102 is chosen to be lower than atmospheric pressure and sufficient to pull waste through hopper 101 and macerator 103. Vacuum sensor 301 is configured to sense changes to the pressure that are sufficient to jeopardise effective operation to pull waste through hopper 101. The determination is sent to the module 306, and, if necessary, the vacuum pump 105 is operated to compensate for a change in pressure and thus maintain a desired pressure.

Level sensor 302 monitors the level (height) of the feedstock within the tank so that it can be determined whether the tank is full. Level sensor 302 may be a RM900 multiturn solid shaft encoder having a resolution of 24 bits/4096 steps per revolution. The temperature of the feedstock is measured by temperature sensor 303 which is preferably a TA 3131 temperature transmitter sensor (-50 to 150 deg C) with an analogue output of 4-20 milliamps. The temperature of the feedstock is a useful indicator of the extent to which it has been processed and therefore its maturity.

Pressure sensor 304 is typically a PT5404 electronic sensor with a measuring range of 0-10 bar. Valves within unit 100 are air valves and therefore need to be maintained at an operational pressure. If pressure sensor 304 detects a deviation from operational pressure, a compressor (not shown) can be used maintain the pressure required to effective operation of the valves.

Door sensor 305 senses whether the door of hopper 101 is properly shut and is typically a SI18-DC8 PNP NO proximity door sensor having a switching distance of 8mm. If sensor 305 determines that the door to hopper 101 is not properly shut, a routine wash cycle to wash hopper 101 and macerator 103 (using pressurized water) will be delayed until sensor 305 determines that door is properly closed. Weight sensor 317 is preferably a strain gauge load cell and SEM 1600B amplifier and measures the weight of the feedstock in the storage tank 102. The weight of the feedstock is used by the PLC 311 to measure its specific gravity.

Module 306 generally acts as a node to manage the sending of data from the sensors to the PLC 311 and the receipt of instructions from the PLC 311 relating to operation of inverters 307-310. Typically module 306 is a CAN node CR2016, I/O module digital and analogue CAN interface with configurable input/output functions. Level and temperature sensors 302, 303 are configured to take readings periodically (discussed below) and immediately send the readings to module 306 which in turn passes them to PLC 311. Readings from weight sensor 317 are sent directly to PLC 311. The vacuum, pressure and door sensors 301, 304 and 305 are configured to sense a change in default operating conditions of their respective components and as such take readings far more frequently than other sensors.

Based on instructions from PLC 311 (which may derive from readings from sensors 301-305), module 306 can instruct a change in default operation of jetting inverter 307, macerator inverter 308, hydrolyser inverter 309 and vacuum pump inverter 310. For example, if it is determined that a user is attempting to open the door to hopper 101 during a wash cycle, jetting inverter 307 (which controls output of pressurized water) can be controlled accordingly. Macerator inverter 308 controls the driving power of macerator 103. Detection of a significant change in power usage by macerator inverter 308 may indicate that macerator 103 is malfunctioning and needs to be switched off to facilitate servicing.

PLC 311 (also located within telematics unit 107) is typically a CR0020 PLC which can program 40 inputs/outputs with configurable functions. An RS232 PC interface 312 allows for a laptop, for example, to be connected to the PLC 311. This facilitates the copying of historical data relating to operation of unit 100 to the laptop such that the data can be analysed by an engineer (for example) for diagnostic purposes, performance analysis review and the like.

PLC 311 is the processing hub of control module 107. It is configured to analyse the data received from sensors 301-305, 317 and issue output instructions based on the analysis. If the data received from door, vacuum or pressure sensors 305, 301, 304 indicate a fault (for example, that the door of the storage tank was not closed securely after a recent maintenance visit, or that the vacuum pump is faulty such that food is not been drawn into storage tank 102 from hopper 101) the PLC will control operation of the unit 100 accordingly (for example, by powering off various components, outputting instructions or warning messages to user interface 108 and/or issuing alert messages to remote system 318 to schedule a maintenance visit (for example, if wash water is below a predetermined level and requires filling) or remote diagnostics connection).

PLC 311 is further configured to analyse readings from weight, level and temperature sensors 317, 302, 303 and output instructions to hydrolyser inverter 309 based on the analysis. PLC 311 is configured to periodically calculate values of viscosity and specific gravity of the feedstock using the received sensor data and data from the hydrolyser inverter 309, and compare the calculated viscosity value with those in a stored look up table. The look up table comprises a list of values for viscosity and hydrolyser frequency and speed, and is compiled (at least initially) using computational fluid dynamics. Thus, the provision of hydrolyser operational parameters for a particular value range of viscosity is calculated using predictive modelling for how the viscosity will change with hydrolyser speed as the storage tank 102 fills up with feedstock (wherein parameters such as the type of waste that will be input and the frequency at which food will be provided to the unit 100 is based on the location and predicted usage of a specific unit 100). Accordingly, whilst the values in look up table are specific to each unit 100, they are based on a priori estimates. For example, a consultation with a user of unit 100 prior to first use of unit 100 by the user may indicate how often, how much, and what type of food waste will be input to the particular unit 100. This information allows remote system 318 to determine, in conjunction with known information concerning the optimisation of the quality of feedstock generally, desired values for viscosity over the course of a cycle to yield optimal feedstock which will produce the most biogas. This information in turn also determines the initial default operation of the hydrolyser inverter. However, over time, as the unit is used, the remote system 318 is able to build up a more accurate description of how a particular unit 100 is being used, which of course may differ from that as originally predicted. Remote system 318 can then adjust values in the look up table such that processing of the feedstock over time, by virtue of the operation of the hydrolyser 104, is optimised.

Based on historic data relating to a particular unit 100, remote system 318 is also able to predict when storage tank 102 of unit 100 will require emptying. For example, if the previous three empty-to-full cycles each took between 9 and 11 days, the remote system 318 schedules emptying of unit 100 in 10 days from the date storage tank 102 was previously emptied. As discussed above, the PLC 311 of unit 100 is configured to output an alert message to the remote system 318 should the storage tank 102 approach full and require emptying outside of the scheduled dates/times.

As will be discussed in further detail below, the power used by hydrolyser inverter to drive hydrolyser 104 at a known frequency /speed is measured to determine a value of the viscosity of the feedstock using a viscometer. This viscosity value is looked up in the look up value to identify the desired operational characteristics, including frequency of rotation and frequency and duration of operation for the hydrolyser 104. Operation of the hydrolyser 104 is then adjusted accordingly. Once PLC 311 determines, using the look up table, that the feedstock is of optimal quality (i.e. its viscosity has reached the desired value), it can issue an alert to indicate that the storage tank 102 should be emptied, regardless of whether or not the storage tank 102 is full or near-full.

To aid the breakdown of organic waste, water may be introduced into macerator 103, the amount of water depending upon the quantity and type of organic waste. Knowledge of the specific gravity of the feedstock is required in order to determine whether the feedstock can and should be emptied and transported to an aerobic digestion facility. If the specific gravity of the feedstock is too high, for example, the feedstock is too dense to be effectively extracted from storage tank 102. Accordingly, although the viscosity of the feedstock (and its level in the tank) is the primary factor for determining when storage tank 102 should be emptied, the specific gravity of the feedstock is a secondary factor.

In addition to managing the data received from the sensors 301-305, 317 and received from remote system 318, algorithms of the PLC 311 also monitor, control and log the process by which waste is input to and unloaded from the tank. It outputs instructions to the user interface 108 to guide a user through the waste input process and to guide waste collection personnel through the emptying process. Furthermore, the PLC 311 stores data relating to the number of loading operations, number of times the unit has been emptied, the changes in the operation of the machine over time, the particular users of the machine etc, which data is also sent to the remote system 318 for subsequent customer reporting.

Remote system 318 undertakes a variety of functions including storing and collating calculations of values of parameters of feedstock of multiple different units 100, analysing data received from single and multiple units 100, sending firmware upgrades to individual units 100, producing reports for customers/users of unit 100, outputting instructions concerning maintenance and feedstock collection to an organisation responsible for maintenance and/or collection, facilitating remote connection to individual units 100 for remote diagnostic purposes and outputting control instructions to individual units 100 (which may override the instructions of PLC 311, as will be described in further detail below). Some or all functions of remote system 318 may be performed on cloud-based servers.

By collectively analysing the values of viscosity and specific gravity of feedstock received from the PLCs of multiple units 100, remote system is able to intelligently use this information to adjust the operational parameters of an individual unit 100.

Referring again to Figure 3, PLC 311 transfers data to a controller area network remote controller 313 and onto 3G radio modem 314 for transfer of SMS messages and data packages. Remote controller 313 also includes a GPS receiver for location tracking. Remote controller 313 is configurable to send the data to remote system 318 using either GPS/GPRS antenna 315 (if a usable network is available at the location of the unit 100) or a controller area network wifi adaptor (if no appropriate network is available). SMS is preferred since messages can be sent and received with a weak signal and can be used by networks which span a very large geographical area. Advantageously, SMS messages are queued and resent in the case of failure of an initial message. Alert, periodic logging, control and location messages adopt a specific format to make effective use of the 160 character limit for SMS messages. The format consists of a series of values, commencing with the sending unit's unique 5 digit serial number, a unique incrementing 6 digit message identifier, followed by a single character denoting message type, followed by a series of parameter values, followed by a 5 digit checksum and a single digit to denote the end of the message. Each parameter value will have a single character denoting the parameter type then the parameter value. A delimiter (hash) is used between each element of the message so that field length can be modified and automatically detected by the position of the delimiter.

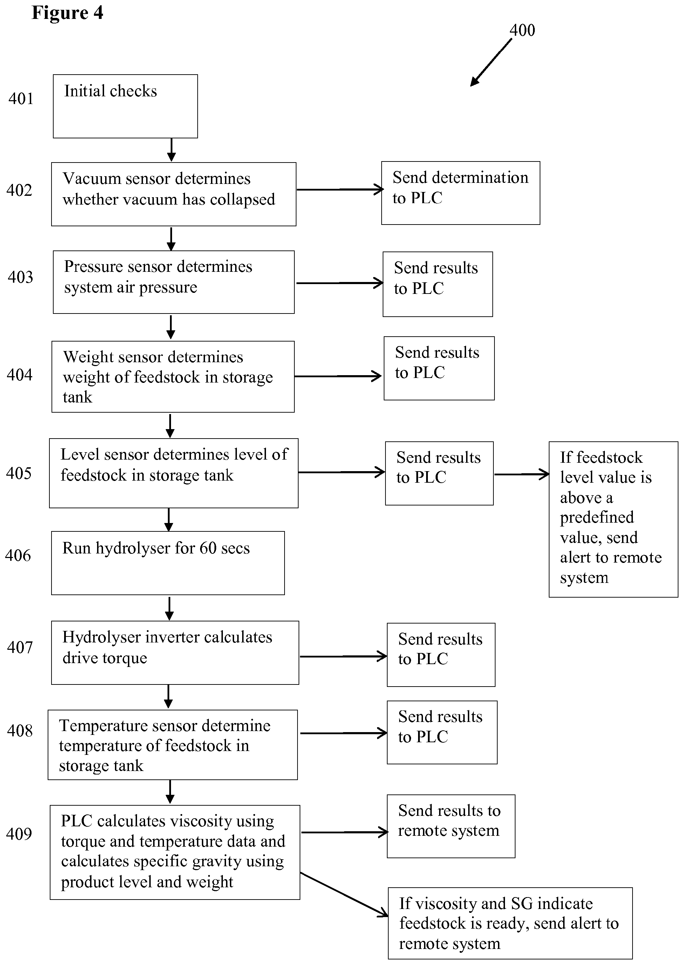

An overview of the data collection process will now be described with reference to Figure 4. The process described in Figure 4 typically occurs within a predetermined time period following a loading operation (i.e. completion of the process of a user inputting food waste into the unit 100) and at predetermined time intervals thereafter. The predetermined time period and interval is set depending on the estimated usage characteristics of a particular unit 100, amongst other reasons. The predetermined time period following loading is timed using a countdown timing. If a subsequent loading operation occurs within the predetermined time period, the countdown timer is reset, and the process of figures 4a and 4b will not start unit the countdown timer has reached zero. This is to ensure that the unit 100 is in a stable state.

Step 401 denotes a number of initial automated checks that are made by the PLC 311 of unit 100. Such initial checks typically include checking whether or not unit 100 is in sleep mode (i.e. not hydrolysing the contents of storage tank 102), checking whether organic waste is currently being loaded into hopper 101, checking whether storage tank 102 is currently being emptied, and checking whether a washing cycle is currently in progress. If the initial checks are satisfied, the process moves to step 402 whereby the vacuum sensor 301 determines whether or not there is a deviation from the system pressure that may require compensation by vacuum pump 105. Assuming the system vacuum has not collapsed, pressure sensor 304 determines the air pressure for system values at step 403.

At step 404, the weight of the feedstock is measured and at step 405 the height level of the feedstock in storage tank 102 is measured. Once the vacuum, pressure, weight and level sensor readings have been collected and sent to the PLC 311, the PLC 311 instructs the hydrolyser to run at a predetermined frequency for 60 seconds. This is done so that the torque exerted by the hydrolyser can be calculated by the hydrolyser inverter (steps 406 and 407). At step 408, the temperature of the feedstock is determined. At step 409, the PLC 311 uses the determined torque to calculate the viscosity of the feedstock. As the feedstock becomes more viscous, the hydrolyser inverter will be required to supply a greater current to maintain a speed of the hydrolyser, thereby resulting in higher torque output from its motor. The specific gravity of the feedstock is calculated by the PLC 311 using the level and weight readings. Specific gravity is an indicator of the solid content within the feedstock. As mentioned above, a value of specific gravity above a predetermined amount indicates that there may be difficulty in emptying the feedstock. If the calculated values of the parameters of the feedstock indicate that the quality of the feedstock is optimal, the remote system 318 is alerted.

The frequency at which the hydrolyser 104 of a particular unit 100 will be driven will depend on the type and quantity of organic waste input into unit 100. For example, if waste is input infrequently, hydrolyser 104 may need only rotate at a frequency of 60 rpm for a period of 1 minute every hour in order to effectively process the feedstock such that the viscosity of the feedstock is optimal when storage tank 102 is full or near full. Operating hydrolyser 104 more frequently than this may consume unnecessary power. For a different unit 100 having different usage characteristics, the duration and frequency for which the hydrolyser runs and the frequency at which it is rotated may be different.

Accordingly, once the PLC has determined the viscosity of the feedstock as a result of the data collection process, the PLC 311 compares the calculated values of viscosity with a look up table (as discussed above) to determine new operational parameters of hydrolyser 104 to optimise feedstock quality. Alternatively or additionally, remote system 318, having received the viscosity and specific gravity values of the feedstock, compares the viscosity values to a large data set relating to multiple waste management units and determines new operational parameters for hydrolyser 104 accordingly (as discussed above). When the remote system 318 does determine new operational parameters, and such determination coincides with a determination made by PLC 311, the associated instructions sent to the PLC 311 from remote system 318 may override those generated by the PLC 311 itself.

The PLC of unit 100, having received instructions from remote system 318 or those it has calculated, controls the inverter of hydrolyser 104 such that the hydrolyser will run at the specific speed and frequency, until newer instructions instructing a change of the current hydrolyser operational parameters are received.

## Claims

1. Waste management apparatus comprising;
means for receiving and storing organic waste,
processing means configured to process the organic waste into feedstock, and
a programmable logic controller in communication with the processing means, wherein the programmable logic controller is configured to:
determine values of one or more properties of the feedstock using the processing means,
determine one or more new operational parameters of the processing means based on the determined values of the one or more properties of the feedstock, and
output instructions to the processing means, wherein the instructions are based on the determined one or more new operational parameters.

2. The apparatus of claim 1, wherein the determined values of one or more properties of the feedstock comprise viscosity.

3. The apparatus of claim 2, wherein the processing means comprise a homogeniser, and wherein the programmable logic controller is configured to determine viscosity of the feedstock based on the torque of the homogeniser when run at a predetermined frequency for a predetermined duration.

4. The apparatus of claim 3, wherein the one or more new operational parameters of the processing means comprise duration of operation of the homogeniser, frequency of operation of the homogeniser and rotational frequency of the homogeniser.

5. The apparatus of claim 4, wherein the programmable logic controller is configured to determine one or more new operational parameters using a look up table.

6. The apparatus of any preceding claim, further comprising communication means for communicating with a remote server, wherein the programmable logic controller is configured to send the determined values of one or more properties of the feedstock to the remote server.

7. The apparatus of claim 3, wherein the determined values are packaged in a message, and wherein the message is sent wirelessly.

8. The apparatus of any preceding claim, further comprising one or more sensors configured to collect data relating to parameters of the feedstock, wherein the data configured to be collected by the one or more sensors comprise the level of feedstock in a storage tank of the apparatus, the temperature of the feedstock in the apparatus and the weight of the feedstock in the apparatus, or further comprising a display interface, and wherein the programmable logic controller is configured to output, to the display interface, a notification pertaining to the status of the waste management apparatus and/or an instruction to perform a maintenance operation to the waste management apparatus.

9. An organic waste management system, comprising
a remote server, and
organic waste management apparatus according to any one of claims 1-8, wherein the apparatus is configured to receive organic waste and process it into feedstock, and wherein the apparatus is configured to send calculated values of one or more properties of the feedstock to the remote server.

10. The system of claim 9, wherein the remote server is configured to determine a new operational parameter of the waste management apparatus based at least in part on the received calculated values of one or more properties of the feedstock.

11. A method for controlling operation of waste management apparatus, comprising
calculating a value of a parameter of the organic waste in the waste management apparatus,
comparing the calculated value with stored data pertaining to the parameter of the waste;
determining values for one or more operational parameters of the waste management apparatus based on the comparison,
generating instructions based on the determined values for one or more operational parameters of the waste management apparatus; and
outputting the instructions to the waste management apparatus.

12. The method of claim 11, wherein the stored data pertaining to one or more operational parameters is stored in the waste management apparatus, or wherein the stored data pertaining to one or more operational parameters of one or more food waste management units is stored at a server remote from the waste management apparatus, for example wherein the stored data comprises data relating to multiple waste management apparatus.

13. The method of either of claims 11 or 12, wherein the instructions are output to the apparatus via SMS.

14. The method of any of claims 11 to 13, wherein the data pertaining to one or more parameters of the waste are sent to a programmable logic controller of the waste management apparatus.

15. A computer readable medium containing executable instructions, which, when executed by a processor, perform the method of any one of claims 12 to 14.
